# EUROPEAN PATENT APPLICATION

(11) **EP 0 775 613 A2**
(43) Date of publication of application: **28.05.1997**
(21) Application number: 96308231.8
(22) Date of filing: 14.11.1996
(51) Int. Cl.: B60R 21/00, G01P 15/08

(54) **Vehicle deformation collision sensor**

(30) Priority: 22.11.1995 US 562309
(71) Applicant: MORTON INTERNATIONAL, INC., Chicago, Illinois 60606 (US)
(72) Inventor: Clark, Marcus T., Kaysville, Utah 84037 (US)
(74) Representative: Johnstone, Douglas Ian

(57) **Abstract**

A collision deformation sensor system for activating passive safety systems in a vehicle. The system includes one or more deformation sensors (12a, 12b). The sensors (12a, 12b) take the form of patterns (30) or circuits which vary their resistance with deformation. The sensors (12a, 12b) are placed upon one or more structural components (22) of the vehicle, such as a door interior, a quarter panel and/or a chassis frame. In the event of a collision, the deformation of the structural component(s) (22) causes the resistance of the sensor (12a, 12b) to alter. This resistance change is sensed and, if sufficiently large to indicate a dangerous collision, the controller activates the passive safety system(s). The controller may receive signals from sensors, such as accelerometers to verify a collision and/or sensors to indicate passenger presence. The controller may also determine the severity of the collision and adapt the performance of the passive restraint system(s) to the particular collision.

## Description

The present invention relates in general to vehicle passive safety systems. In particular, the present invention relates to an improved collision detection system including sensors to detect deformation of the vehicle caused by a collision.

Various types of passive safety systems are known for improving the safety of vehicles. Two of the most common are pretensioning seat belts and air bags. Air bags and pretensioning seat belts both require the sensing of an impact or collision of the vehicle to initiate their operation. While vehicle collisions often involve large forces, it is nonetheless difficult to accurately determine if a collision has actually occurred.

One of the more common contemporary collision sensors is the accelerometer. The accelerometer may measure the sudden deceleration of the vehicle, such as when the vehicle runs headlong into an object, or may measure the increase in acceleration, such as an increase in acceleration to the side as a result of being hit broadside.

Two basic types of accelerometers are employed, mechanical and electrical. A typical mechanical accelerometer may be a weight held in position by a spring, with the force of the spring being overcome (and the weight therefore moving) only under a predetermined acceleration. The accelerometer therefore includes some arrangement to sense if the weight has moved, indicating that the acceleration has been reached (i.e., a collision has occurred). While these typically operate well, it is worrisome that the weight remains in the same position until there is a collision, which may be years after the sensor is manufactured. Specifically, there is the worry that after sitting in the same position for possibly years, the weight will not move if the predetermined accel.eration is reached. Any corrosion or sticking, preventing movement of the weight, will result in the passive systems not operating even though a collision has occurred.

The electrical accelerometer typically includes a piezoelectric element which produces an electric charge when squeezed. This element is placed between a fixed structural member and a movable weight such that acceleration causes the weight to squeeze the element, producing the electric charge. This charge is measured, and a sufficiently large charge indicates that the collision acceleration has been reached. The movement of the weight is again a problem with this type of sensor, with sticking of the weight again producing less of a signal than required, and thus not detecting a collision.

Furthermore, both types of accelerometers may report false collisions. For example, slamming the vehicle door closed may produce a sufficient force to cause the accelerometer to set off the passive safety systems. For these reasons, a second type of collision sensor, the impact sensor, is sometimes preferred.

The impact sensor operates on a different principle, in that it does not measure the acceleration of the vehicle, but an actual impact. A known impact sensor takes the form of a rod having one end braced against the side of the vehicle rocker panel (just below the door), and the other end braced against a switch. In a collision, the impact of the collision will deform the rocker panel, pushing the rod inward to activate the switch, which in turn activates the passive safety systems.

One drawback of impact sensors is their size. In the example above, the first end of the rod must be placed a sufficient distance from the switch such that the deformation will move the rod relative to the switch. In other words, if the switch is too close to the rocker panel, the deformation will move the switch along with the rod, as a unit, and the switch will not be activated.

Another drawback with impact sensors is their "point" nature. Phrased differently, they only sense the impact at the specific point at which they are located. In the above example, an impact with a relatively high object, such as an off-road vehicle having high ground clearance, would result in an appreciable deformation of the door before the rocker panel below the door begins to deform. However, the rod is not moved until there is deformation of the rocker panel. As such, the collision may not be sensed early enough for the passive safety systems to fully deploy.

An object of the present invention is to provide a vehicle collision sensor which accurately and reliably senses a vehicle collision.

Another object of the present invention is to provide such a sensor which reduces to possibility of a false collision detection.

Yet another object of the present invention is to provide such a sensor which detects the deformation of the vehicle due to the collision.

A further object of the present invention is to provide such a sensor which is thin, permitting the sensor to detect deformation in previously unavailable areas.

Yet another object of the present invention is to provide such a sensor which can detect deformation over a large area of the vehicle.

These and other objects are achieved by a collision deformation sensor system for activating passive safety systems in a vehicle. The system includes one or more deformation sensors. The sensors take the form of patterns or circuits which vary their resistance with deformation. The sensors are placed upon structural components of the vehicle, such as the door interior, the quarter panels, and/or the frame. In the event of a collision, the deformation of the structural component(s) causes the resistance of the sensor to alter. This change in resistance is sensed by control circuitry, and, if sufficiently large to indicate a dangerous collision, the control circuitry activates the passive safety system(s). The control circuitry may additionally receive input signals from other sensors, such as accelerometers to verify a collision and/or sensors to verify if a passenger is present in a seat. The control circuitry may also determine the severity of the collision and adapt the performance of the passive restraint system(s) to the particular collision.

The objects and features of the invention noted above are explained in more detail with reference to the drawings, in which like reference numerals denote like elements, and in which:
Fig. 1 is a side view with partial cut-away of a vehicle door having a sensor according to the invention;
Fig. 2 is an interior side view of a vehicle quarter panel having a sensor according to the invention;
Fig. 3 is a side detail view of a vehicle frame having a sensor according to the present invention: and
Fig. 4 is a schematic diagram showing the arrangement of elements in an embodiment of a controller according to the present invention.

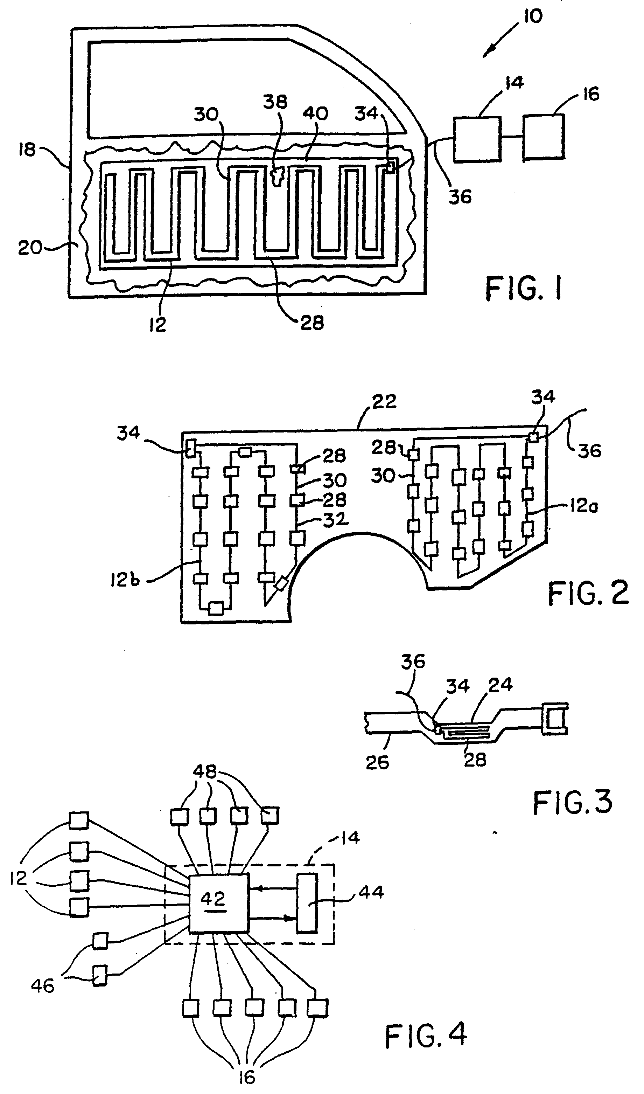

With reference to Fig. 1, a collision deformation sensor system according to the present invention is generally designated by reference numeral 10. The system 10 generally includes a deformation sensor 12 and a controller 14 operatively connected to the sensor. The controller 14 is in turn operatively connected to one or more passive safety systems 16.

Prior to a more detailed discussion of the inventive sensor system, the passive safety systems controlled by the sensor system will be described. These passive systems 16 may take any form which automatically operates due to a collision to improve passenger safety. The most common forms are air bags and pretensioning safety belts. The safety belts are of course associated with the passenger seats, and any type of belt arrangement, and pretensioning mechanism, may be used.

With regard to air bags, as is known in the art the bags may be placed at numerous locations within the passenger cabin. Common locations are the steering wheel, passenger side dashboard, rear face of the front seats, and between the passenger seats and the lateral sides (typically doors) of the vehicle for side impact protection. Any or all of these locations, plus other locations as shown in the prior art, may be employed with this system. Furthermore, any or all of the air bags may be of the adaptive type, where differing amounts of inflation gas may be produced depending upon the severity of the collision.

For each of the passive safety systems, their need is of course dependent upon the presence of a passenger. For most vehicles, at least during a collision, there will typically be at least one passenger, who is the driver. However, the other seats will not necessarily be occupied. As such, passive safety systems may not be required for those seats which are empty. This will be discussed more below.

Returning to the invention, the sensor 12 is secured to a structural component 18 of the vehicle which will undergo deformation upon a collision, hereafter referred to as a deformable component. The deformable component may be any one of numerous structural components commonly known in vehicles. For example, in automobiles the deformable component may be an exterior body panel, such as a door 20 shown in Fig. 1, or a quarter panel 22 shown in Fig. 2. Alternatively, the deformable component may be a section 24 of the frame or chassis 26 of the vehicle, as shown in Fig. 3. For other vehicles, the possibilities will of course vary. For example, in a truck the tailgate may be a deformable component. Additionally, the deformable component is not limited to these particular land vehicles, but could be an appropriate structural component of an aircraft, watercraft, train car, etc.

The sensor 12 may take various forms, but preferably is, or includes, a thin film element 28 which varies an electrical property upon elongation or compression within the plane of the element, or upon bending about a line parallel to the plane of the film. Thin film strain gauges may be employed for the element 28. Suitable members to form the elements 28 are also shown in U.S. Patent No. 5,086,785 to Gentile and U.S. Patent No. 5,309,135 to Langford, both of which are included herein by reference. While various elements are shown within these patents, the most preferred forms are variable resistors. Even here, the most preferred forms of variable resistors are inks or other formulations which may be readily printed or applied. In general, any sensor which detects displacement in a direction other than normal to the plane of the film may be employed.

The sensor 12 takes the general form of a circuit trace or pattern 30 defining a path for current flow. The particular shape of the pattern preferably is designed to extend over at least a portion of the deformable component, with this portion of course being deformable upon collision. To ensure that deformation of the component causes deformation of the element, it is further preferred that the pattern cross and recross the portion multiple times.

While shown in Fig. 1, it is not necessary that the entire pattern 30 be formed by the element 28. With reference to Fig. 2, it may be seen that the pattern 30 may be formed of a plurality of spaced elements 28 connected together by standard conductive traces or lines 32. These standard conductive traces 32 do not vary their electrical properties upon deformation of the deformable component. As such, in the embodiment of Fig. 2, the individual elements 28 will each undergo a change in electrical property upon their individual deformation, thus causing a change in the electrical property for the entire pattern 30.

There may be advantages to forming the pattern with the individual elements 28. First, if the material to form the elements is expensive, this arrangement reduces the amount of material used, reducing cost. Additionally, each element will contribute its own change in electrical property. This means that if the deformable component is only slightly deformed (such as by a car door or shopping cart), there is only a slight change in the electrical property of the pattern. While a pattern formed entirely of the element 28 would also have less change in electrical property for such a small deformation, the change would still be larger than for the spaced individual elements.

As should be apparent, the pattern must be connected to the controller 14 for the controller to sense the change in electrical property. To this end, the sensor will have an appropriate connector 34 to permit wiring 36 to be attached to the ends of the pattern. To reduce the amount of material required and to simplify installation, it is referred that the ends of the pattern be placed in close proximity. This additionally permits a single connector to be used for the sensor.

The sensor 12 is mounted to the deformable component in such a manner that deformation of the deformable component will in turn cause deformation of the sensor. This mounting may be effected by forming the pattern upon a flexible substrate 38 (Fig. 1). Various suitable substrates, such as Mylar®, are available. The pattern may be placed on the substrate by printing, painting, transferring or other suitable techniques. A suitable insulating and protecting cover layer 40 is typically formed over the pattern at this point.

The substrate may then be secured to the deformable component by any means which will permit deformation of at least the elements 28 upon deformation of the deformable component. This will vary with the particular deformable component. For some components (typically those having very predictable and simple deformed shapes), simply securing the periphery, or a portion of the periphery, of the substrate to the component will be sufficient to ensure that the element is deformed with the component. This may be achieved with standard fasteners such as screws, etc., or may be by adhesive bonding, or heat or ultrasonic bonding. For most components, however, a more secure mounting is desired.

Typically, the entire substrate (or at least those sections under the elements 28) is secured to the component. For most metal components, this will be achieved by adhesively securing the substrate to the component. For plastic components, adhesives may be used, but heat or ultrasonic welding is also possible, as is molding the sensor within the element.

Depending upon the component and the use, it may be preferred to form the sensor directly upon the component. This is shown in Fig. 2. For this arrangement, the pattern 30 is directly applied to the component using the printing, spraying, transfer, etc. processes noted above. For this to be operative it is of course necessary that the component be nonconductive (i.e., dielectric), or to form a dielectric layer upon the component prior to forming the pattern. Additionally, it will typically be necessary to form an insulating and protective cover layer over the pattern, as in the previous embodiments. This may be achieved by spraying a coating, or securing a protective sheet, such as by adhesive.

The sensor 12 is preferably mounted upon a section of the deformable component which is not visible. This is not a limitation for the chassis 26 of Fig. 3. However, for exterior body panels, it is preferred that the sensor be mounted upon an interior face of the panel. Also, as noted above, the pattern should cover a portion of the component which will deform during a collision.

For certain types of elements 28 the change in electrical property occurs only upon deformation in a particular direction (e.g., bending about a line below the element, or elongation of the element). For these elements it is also necessary that the pattern, or at least the elements within the pattern, be placed such that they will undergo the particular type of deformation during collision. An example of this is shown in Fig. 3, where the sensor is mounted to a collapsible section 24 of the chassis. Such sections are designed to undergo a specific predictable deformation under the force of a collision, and as such the element(s) 28 may be appropriately placed. If the deformation is random, the use of plural small elements may be advantageous, since those elements which undergo the wrong type of deformation will not vary their electrical property. However, those elements which undergo the proper deformation will vary their property, and this may be sensed to activate the passive safety system(s).

As is best shown in Fig. 2, it is also possible to use more than one sensor on each component. In the embodiment shown, the exterior quarter panel 22 is provided with a first sensor 12a in a portion corresponding to the front area of the vehicle, and a second sensor 12b in a portion corresponding to a side of the vehicle. In this manner, the first sensor 12a may be used to sense a frontal collision, while the second sensor 12b senses side or lateral collisions. As noted above, the elements may be oriented to avoid or reduce improper sensing (such as second sensor 12b for lateral collisions sensing a frontal collision).

More than one sensor may also be used to sense a collision within a common area. For example, two sensor patterns could cover a common area, and both be connected to the controller. The controller would only activate the safety systems if both sensor underwent a sufficient change in property to justify activation, but not if only one underwent such a change. This would tend to guard against accidental activation of the safety systems.

As noted above, the sensor(s) are operatively connected to controller 14. If plural sensors are used, each is connected to the controller, or is provided with its own individual controller.

Various controllers may be used with the sensors, so long as the controller is capable of receiving information relating to the electrical property of the sensor, and initiating a safety system activation signal upon a sufficient change in the electrical property.

The controller may consist of or include a simple circuit which produces the activation signal upon a sufficient absolute change in the property. For example, from an original baseline value of 5, the circuit activates when the property reaches a value of 30. However, it is desirable to take into account changes in the property which are not relevant to the collision. For example, thermal expansion or contraction, age, or an existing deformation of the component may cause a change in the property which is independent of any collision.

As such, it is preferred that the controller constantly reset its baseline value for the property, and thereafter consider changes in the property relative to this updated baseline. In this manner the controller does not activate based upon the absolute amount of change in the property, but rather upon the rate of change in the property. Changes in the property due to thermal expansion, etc. noted above occur slowly, and thus may be disregarded. Collisions, however, occur rapidly, and these rapid changes may be detected to cause the controller to activate the safety systems.

This arrangement is shown in Fig. 4, where the controller 14 employs a microprocessor 42 which checks the value of the property several times a second, and stores the previous reading in a memory 44 as the baseline for each subsequent reading. With this method, the stored baseline is subtracted from the current reading, providing the amount of change in the property since the last reading. This value is then compared to a threshold value stored in the memory 44. Only when this calculated value is greater than the threshold value will the controller activate the safety systems.

As noted above, the controller 14 compares the difference between the current reading of the sensor and the stored baseline value against a stored threshold value. Such a basic system will operate effectively and provide very effective protection to the passenger(s) of the vehicle. However, the controller may also consider other factors in determining whether to activate the safety systems.

For example, the controller may also receive input from one or more accelerometers 46 mounted on the vehicle. The accelerometers would be located and operate in a standard manner, but the controller would also consider their input. For example, the controller could perform an "AND" operation, where the safety systems are activated if both the sensor 12 and the accelerometer 42 indicate a collision, but are not activated if only one or the other indicates a collision.

As another example, the controller 14 could receive input from sensors 48 which determine if a passenger is present in a particular area. The controller would then activate the safety systems for that particular area only if the passenger were sensed to be present. Similarly, there may be out-of-position sensors (not shown) to determine if passengers are sitting unusually far forward or to the side of the seat. In such a situation the controller could initiate the safety systems sooner than normal, or with a different inflation (i.e., pressure output) profile to provide adequate protection even for these passengers.

The controller may also consider the characteristics of the change in sensor property to judge the severity of the collision, and cause the safety systems to adapt their response accordingly. For example, the controller may consider not only whether the calculated change in sensor output has exceeded the threshold value, but also by how much the threshold has been exceeded. For example, if the change in sensor output barely exceeds the threshold value, this would indicate a relatively minor collision, and the safety systems could be activated to provide a moderate response, such as by activating an air bag at a low amount of inflation. Conversely, a change in sensor output greatly exceeding the threshold value would indicate a severe collision, and the safety systems could be activated to their highest level, such as by providing greater inflation pressure to the air bag.

From the foregoing it will be seen that this invention is one well adapted to attain all ends and objects hereinabove set forth together with the other advantages which are obvious and which are inherent to the structure.

It will be understood that certain features and subcombinations are of utility and may be employed without reference to other features and subcombinations. This is contemplated by and is within the scope of the claims.

Since many possible embodiments may be made of the invention without departing from the scope thereof, it is to be understood that all matter herein set forth or shown in the accompanying drawings is to be interpreted as illustrative, and not in a limiting sense.

## Claims

1. A vehicle deformation collision sensor (10) comprising:
a substrate (38),
a circuit pattern (12, 12a, 12b) formed upon said substrate (38), at least portions (28) of said circuit pattern (12, 12a, 12b) having an electrical property which varies upon said deformation of said portions (28),
said substrate (38) being mounted upon a component (20, 22, 24) of a vehicle deformable by collision.

2. The sensor (10) of claim 1, further including a cover layer (40) over said circuit pattern (12, 12a, 12b).

3. The sensor of claim 1 or 2, wherein said substrate (38) is adhesively secured to said deformable component (20, 22, 24).

4. The sensor of claim 1, 2 or 3, wherein said deformable component (20, 22) is an exterior body section of the vehicle.

5. The sensor of claim 1, 2 or 3, wherein said deformable component (26) is a section (24) of a frame of said vehicle.

6. The sensor of any preceding claim, wherein more than one of said sensors (12a, 12b) is mounted upon said deformable component (22).

7. The sensor of any preceding claim, wherein said circuit pattern (12a, 12b) includes lines (32) formed of conductive material which does not change said electrical property upon said deformation, with said lines (32) being connected by elements (28) of conductive material which does change said electrical property upon said deformation.
